# FASCICULE DE BREVET EUROPEEN

(11) **EP 2 282 136 B1**
(45) Date de publication et mention de la délivrance du brevet: **26.04.2017**
(21) Numéro de dépôt: 10171022.6
(22) Date de dépôt: 28.07.2010
(51) Int. Cl.: F24F 11/00

(54) **Installation de ventilation mécanique contrôlée à double flux d'un bâtiment**
Kontrollierte mechanische Be- und Entlüftungsanlage eines Gebäudes
Ventilation system and control method thereof

(30) Priorité: 29.07.2009 FR 0955299
(43) Date de publication de la demande: 09.02.2011
(73) Titulaire: ALDES AERAULIQUE, 69200 Venissieux Cedex (FR)
(72) Inventeur: Buseyne, Serge, 31200 Toulouse (FR); Boulanger, Xavier, 31460 Loubens Lauragais (FR); Labaume, Damien, 31570 Preserville (FR)
(74) Mandataire: Verriest, Philippe

(56) Documents cités:
- WO-A-01/84057
- WO-A-2007/080162
- US-A- 4 437 608
- US-A- 5 024 263
- US-A- 5 228 306
- US-A1- 2004 140 080

## Description

La présente invention concerne une installation de ventilation mécanique contrôlée à double flux d'un bâtiment.

Compte tenu de l'évolution actuelle des bâtiments, les besoins de chauffage tendent à diminuer fortement. En effet, les progrès obtenus grâce à la conception et à l'utilisation de nouveau matériau en terme d'isolation, de vitrage et de limitation des ponts thermiques, ont permis de réduire de manière importante les déperditions thermiques des habitations. Toutefois, dans ce type d'habitat, il convient de diminuer les déperditions par renouvellement d'air. La ventilation mise en place est généralement de type double flux. Dans une ventilation double flux, un réseau aéraulique est destiné à l'insufflation de l'air dans les pièces principales ou pièces de séjour, et un deuxième réseau assure l'extraction de l'air dans les pièces techniques ou pièces humides. Une ventilation mécanique contrôlée à double flux comprend deux ventilateurs assurant globalement le même débit, dont l'un est destiné à insuffler de l'air dans le bâtiment, et dont l'autre est destiné à extraire l'air hors du bâtiment.

Il existe des installations dites à "double flux statiques". Une telle installation se caractérise par le fait qu'un échangeur statique récupère les calories de l'air vicié, c'est-à-dire extrait du bâtiment, pour les céder à l'air neuf entrant dans le bâtiment. Cette récupération est gratuite.

Il existe également des installations dites à "double flux thermodynamiques". Une installation à double flux thermodynamiques se caractérise par le fait qu'un échangeur thermodynamique, tel que pompe à chaleur air extrait - air neuf, récupère les calories de l'air vicié pour les céder à l'air neuf. Ce type d'installation a l'avantage de contribuer en partie au chauffage fournissant des températures d'insufflation d'air supérieures à la température de l'air extrait.

Le document WO 89/05947 décrit un procédé de commande d'une installation de ventilation mécanique contrôlée à double flux ayant deux ventilateurs et mesurant en permanence le débit d'au moins un des ventilateurs en vue d'asservir le second.

Néanmoins, ce procédé a l'inconvénient de nécessiter l'utilisation de débitmètres mis en place dans au moins trois branches des réseaux.

Ce procédé a aussi l'inconvénient de réaliser des ajustements de débits par l'utilisation de canaux complémentaires de contournement ou « bypass » de l'échangeur.

Le document WO 01/084057 décrit une installation de ventilation à double flux, comportant un capteur de mesure du débit d'air de ventilation agissant sur la vitesse de rotation des ventilateurs d'insufflation, et d'extraction, pour équilibrer les débits d'air véhiculés par ceux-ci.

Dans une telle installation, les capteurs placés sur les conduits d'insufflation et d'extraction d'air agissent, à travers un automate, directement sur la vitesse de rotation des ventilateurs. Ces capteurs peuvent réagir au dioxyde de carbone, à l'humidité ou à la température. Quel que soit le paramètre contrôlé, il y a simplement une instruction de commande du fonctionnement fournie par l'automate aux ventilateurs, en dehors d'une véritable boucle de régulation.

Le document WO 2007/080162 concerne un dispositif de refroidissement et de ventilation d'un local selon le préambule de la revendication 1, comportant en particulier circuit d'insufflation d'air et un circuit d'extraction d'air sur lesquels sont disposés deux ventilateurs. En fonction du mode de fonctionnement de l'appareil : refroidissement, chauffage, récupération de chaleur ou ventilation les paramètres de fonctionnement sont réglés à partir d'un automate.

Le problème technique à la base de l'invention est de résoudre en tout ou partie les inconvénients précités, en fournissant une installation de ventilation mécanique contrôlée à double flux dont les débits d'air d'insufflation et d'extraction sont modulés en fonction de paramètres reflétant le besoin de ventilation, tout en étant équilibrés.

À cet effet, l'invention concerne une installation de ventilation mécanique contrôlée à double flux d'un bâtiment, comprenant :
- un réseau d'insufflation d'air, permettant d'amener de l'air frais dans au moins une pièce dite de séjour ;
- un réseau d'extraction d'air, permettant d'extraire de l'air vicié hors d'au moins une pièce dite technique ;
- le réseau d'insufflation d'air et le réseau d'extraction d'air étant équipés respectivement d'un ventilateur d'insufflation d'air et d'un ventilateur d'extraction d'air, pourvus chacun de moyens permettant d'ajuster respectivement le débit d'insufflation d'air et le débit d'extraction d'air fournis par les ventilateurs ;
   caractérisée en ce qu'au moins l'un des réseaux d'extraction ou d'insufflation d'air étant équipé d'un organe de modification de la section de passage de l'air, réagissant de façon automatique, c'est-à-dire sans commande extérieure, à des paramètres extérieurs tels que l'hygrométrie ou le taux d'occupation d'une pièce,
- des moyens de mesure de la pression dans le réseau équipé de l'organe de modification de la section de passage de l'air ;
- des moyens de détermination des débits, respectivement dans le réseau d'insufflation d'air et dans le réseau d'extraction d'air;
- des moyens de commande conçus pour, après variation de la section de passage de l'air dans le réseau équipé de l'organe correspondant et en fonction de la pression mesurée dans ledit réseau, piloter le ventilateur de ce réseau, dit ventilateur maître, pour modifier le débit dans ce réseau et ainsi ramener la pression de ce réseau à une pression de référence, les moyens de commande étant en outre conçus pour, après détermination des débits d'air dans le réseau d'insufflation et dans le réseau d'extraction, piloter le ventilateur de l'autre réseau, dit ventilateur esclave, afin de d'asservir le débit fourni par le ventilateur esclave en fonction du débit fourni par le ventilateur maître.

L'invention permet ainsi de disposer d'une installation dont les débits d'air insufflé et d'air extrait sont maîtrisés et fonction l'un de l'autre, même si la valeur de ces débits augmente ou diminue en fonction des besoins.

Les différents composants de l'installation gèrent, dans le cadre d'une boucle de régulation déterminée l'adaptation des conditions de fonctionnement des réseaux, lorsqu'un événement se produit sur l'un d'eux.

Il est important de noter qu'à la base de la boucle de régulation se trouve un organe de modification de la section de passage de l'air dans un réseau, réagissant de façon automatique et directement à des paramètres extérieurs, tels que l'hygrométrie ou le taux d'occupation d'une pièce par des personnes. Cet organe de modification de section est à l'origine de la boucle de régulation, sans pour autant être relié physiquement aux moyens de commande, puisque ce sont seulement les conséquences de la modification de section de cet organe, qui sont prises en compte pour la suite de la régulation. Il est ainsi possible de disposer de plusieurs organes de modification de la section de passage de l'air dans l'un et/ou dans l'autre réseau, sans que ces organes soient reliés physiquement aux moyens de commande constitués , par exemple par un automate, ce qui simplifie l'installation.

Selon une caractéristique de l'invention, le réseau équipé du ventilateur esclave comporte au moins un organe de modification de la section de passage de l'air, équipé de moyens de pilotage dudit organe en fonction d'une commande extérieure, les moyens de commande étant conçus pour, après modification de débit fourni par le ventilateur esclave, piloter la position dudit organe dans une position prédéterminée.

Une telle caractéristique permet de ramener la pression du réseau équipé du ventilateur esclave proche de la pression de référence, après que le débit de celui-ci soit ramené à une valeur dépendante de celle du ventilateur maître.

Selon une autre forme de réalisation de l'invention, le réseau équipé du ventilateur esclave comporte des moyens de mesure de la pression ainsi qu'un organe de modification de la section de passage de l'air, équipé de moyens de pilotage dudit organe en fonction d'une commande extérieure, les moyens de commande étant conçus pour, après modification de débit fourni par le ventilateur esclave et en fonction de la pression mesurée dans ledit réseau, piloter la section de passage de l'air afin de ramener la pression dans ledit réseau à une pression de référence.

Cette caractéristique assure la même fonction que celle décrite précédemment, avec une précision plus importante.

Une telle caractéristique permet également de dimensionner les réseaux d'insufflation et d'extraction de façon optimum, les éventuelles surpressions pouvant être compensées par le degré d'ouverture de l'organe piloté.

Avantageusement, le débit dans le réseau d'insufflation, respectivement dans le réseau d'extraction, est déterminé en fonction de la vitesse de rotation ou d'un paramètre électrique, tel que l'intensité électrique, du ventilateur d'insufflation, respectivement du ventilateur d'extraction, et/ou en fonction de la pression dans le réseau correspondant.

De cette manière, il n'est pas nécessaire de disposer de débitmètres, comme cela est le cas dans l'art antérieur, ce qui facilite la mise en oeuvre et le fonctionnement de l'installation.

Selon une possibilité de l'invention, les moyens de commande sont conçus pour, après mesure des débits des deux ventilateurs, comparer les deux débits puis ajuster le débit du ventilateur fonctionnant avec le débit le plus faible, sur le débit du ventilateur fonctionnant avec le débit le plus élevé, le ventilateur présentant le débit le plus élevé formant alors le ventilateur maître, et le ventilateur présentant le débit le plus faible formant alors le ventilateur esclave.

Ainsi, il n'y a plus un ventilateur maître et un ventilateur esclave, mais deux ventilateurs qui peuvent être successivement maître et esclave, suivant les conditions de fonctionnement et suivant les modifications de certains paramètres.

Préférentiellement, au moins l'un des organes permettant de modifier la section de passage d'air comporte un système de compensation en pression augmentant leur section d'ouverture lorsque la pression dépasse une valeur prédéterminée.

Cette caractéristique permet de stabiliser la pression sur les réseaux, en particulier sur le réseau d'air équipé du ventilateur esclave, qu'il s'agisse du réseau d'insufflation ou d'extraction.

En effet, il est important d'avoir une pression disponible sur ces organes qui soit maitrisée, afin de compenser les effets d'augmentation de perte de charge liés par exemple à l'encrassement progressif d'un filtre ou le colmattage de l'échangeur dû à un givrage de ce dernier.

En outre, une augmentation importante de la pression dans les réseaux serait également une source de nuisances acoustiques et de surconsommation électrique des ventilateurs. Dans la mesure où les organes précités sont dotés d'un système de compensation aux pressions, il est possible d'augmenter ou de diminuer automatiquement la section de passage de l'air dès que la valeur de pression s'écarte trop d'une valeur pré-déterminée par exemple de 100 Pa sur le réseau d'extraction.

Selon une caractéristique de l'invention, les moyens de commande sont conçus pour asservir le débit du ventilateur esclave au débit du ventilateur maître avec une valeur du débit du ventilateur esclave comprise entre 75 et 100% du débit du ventilateur maître, en fonction de la perméabilité à l'air de l'enveloppe du bâtiment et de la dépression résultante admise entre l'intérieur et l'extérieur du bâtiment.

Ceci permet également d'éviter une augmentation de pression trop importante à l'extraction ou à l'insufflation sur le réseau d'air esclave, une telle augmentation de pression étant source de nuisances acoustiques et de surconsommation électrique des ventilateurs.

Avantageusement, l'organe de modification de la section de passage de l'air équipant le réseau comprenant le ventilateur maître et/ou l'organe de modification de la section de passage de l'air équipant le réseau comprenant le ventilateur esclave est une bouche à section variable.

La présente invention concerne également un procédé de régulation d'une installation de ventilation précédemment définie comportant les étapes suivantes :
- en conséquence à une variation d'un paramètre extérieur, tel qu'hygrométrie ou taux d'occupation d'une pièce, modification automatique de la section de passage de l'air par un organe situé dans l'un des réseaux, d'insufflation ou d'extraction,
- mesure de la pression d'air dans ce réseau et fourniture de l'information de pression aux moyens de commande,
- pilotage par les moyens de commande du ventilateur associé à ce réseau pour modifier le débit et ramener la pression d'air dans ce réseau à une pression de référence,
- mesure des débits d'air dans les deux réseaux et fourniture de l'information aux moyens de commande, qui pilotent le ventilateur du second réseau pour asservir le débit fourni par ce ventilateur au débit fourni par le ventilateur du premier réseau, afin de maintenir un équilibre des débits d'air insufflé et extrait.

De toute façon, l'invention sera bien comprise à l'aide de description qui suit, en référence au dessin schématique annexé représentant, à titre d'exemples non limitatifs, plusieurs formes de réalisation d'une installation de ventilation mécanique contrôlée à double flux d'un bâtiment.
Figure 1 est une représentation schématique d'une installation selon une première forme de réalisation de l'invention, dans laquelle le ventilateur d'insufflation fonctionne en tant que ventilateur maître ;
Figure 2 est une représentation similaire à la figure 1, dans laquelle le ventilateur d'extraction fonctionne en tant que ventilateur maître ;
Figures 3 et 4 sont des représentations correspondant à la figure 2, respectivement d'une deuxième et d'une troisième formes de réalisation de l'invention.

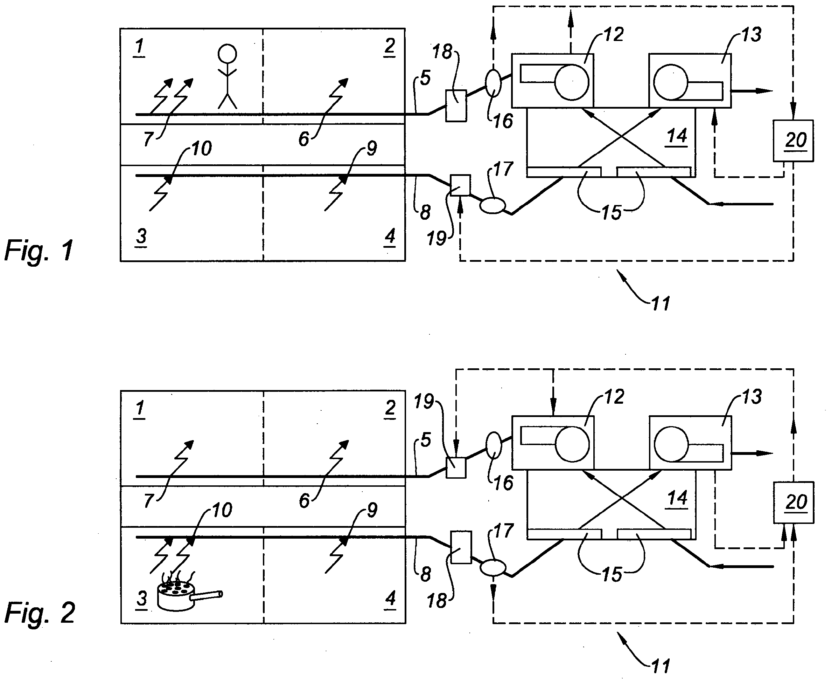

Une installation selon une première forme de réalisation, représentée à la figure 1, est destinée à équiper un bâtiment comprenant des pièces de séjour 1, 2 et des pièces techniques 3, 4. Un réseau d'insufflation d'air 5 alimente les pièces de séjour 1, 2 dans lesquelles sont disposées des terminaux 6, 7. Les pièces techniques 3, 4 sont reliées à un réseau d'extraction d'air 8, des terminaux 9, 10 étant ménagés dans les pièces techniques 3, 4 pour leur raccordement au réseau 8. L'installation comprend un dispositif de ventilation à double flux 11 constitué essentiellement, à l'intérieur d'un caisson, d'un ventilateur d'insufflation d'air 12 monté dans un premier compartiment et relié au réseau 5, et d'un ventilateur d'extraction d'air 13 monté dans un second caisson et relié au réseau d'extraction 8. Un échangeur thermique 14 peut être disposé entre les caissons contenant les ventilateurs 12, 13 pour réaliser un préchauffage de l'air neuf à insuffler dans le bâtiment, à l'aide de l'air vicié extrait du bâtiment.

L'échangeur thermique 14 peut être équipé de filtres 15 conçus pour être changés en cas d'encrassement.

Le réseau d'insufflation 5 et le réseau d'extraction 8 sont équipés chacun moyens de mesure 16, 17 de la pression dans le réseau correspondant 5,8.

Le réseau d'insufflation 5 comporte de plus au moins un organe de réduction de la section de passage de l'air fonctionnant de manière automatique 18, c'est-à-dire pouvant réagir sans commande extérieure à des paramètres extérieurs tels que l'hygrométrie ou le taux d'occupation d'une pièce.

Un tel organe peut être formé par un registre 18, comme cela est représenté à la figure 1, ou par une grille de soufflage formant un terminal 6, 7 disposé à l'extrémité du réseau d'insufflation 5.

Le réseau d'extraction 8 comporte en outre au moins un organe de réduction de la section de passage de l'air 19 apte à être piloté par une commande externe.

Cet organe pilotable peut être formé par un registre pilotable 19, comme cela est représenté à la figure 1, ou par une bouche d'extraction dont la section de passage peut être pilotée. La bouche d'extraction pilotable forme alors un terminal 9, 10 disposé à l'extrémité du réseau d'extraction 8.

Préférentiellement, chaque registre 18, 19, bouche ou grille est apte à fonctionner à la fois de manière automatique ou de manière pilotée, en fonction des conditions d'utilisation de l'installation, conférant à l'installation un caractère « réversible » comme cela est mieux décrit ci-après.

L'installation comporte en outre un boîtier de commande 20. Ce boîtier 20 reçoit des informations relatives à la pression dans les réseaux d'insufflation et d'extraction 5, 8, et des informations relatives au débit des ventilateurs respectivement d'insufflation et d'extraction 12, 13.

Le débit de chaque ventilateur 12, 13 est calculé notamment en fonction de la vitesse de rotation ou d'un paramètre électrique, tel que l'intensité électrique du ventilateur. On peut également calculer le débit de chaque ventilateur en utilisant, outre les paramètres indiqués précédemment, la pression du réseau correspondant 5, 8. Ainsi, l'installation ne nécessite pas l'utilisation de débitmètres additionnels.

Le boîtier de commande 20 contient également des moyens de comparaison entre les débits circulant dans les réseaux 5, 8 et des moyens de commande agissant sur les moteurs pour adapter leurs vitesses aux débits souhaités. Enfin, ce boîtier 20 peut contenir des éléments de commande de la section de passage des terminaux 6, 7 9, 10 ou des registres 18, 19, pour faire varier leur ouverture en fonction de la pression.

Sur les figures, les flèches en traits pleins représentent les flux d'air, les flèches en traits pointillés représentant les flux d'information ou les commandes.

En conditions normales, le débit du ventilateur d'insufflation 12 et le débit du ventilateur d'extraction 13 sont identiques, de telle sorte que l'installation se trouve équilibrée en débit.

Lorsqu'un détecteur de présence dans une pièce de séjour 1, 2 détecte la présence d'un certain nombre de personnes (mode de fonctionnement représenté à la figure 1), il en résulte un besoin de ventilation dans les locaux d'insufflation 1, 2. Ce besoin est rempli par l'ouverture de l'organe de modification de la section de passage 18. Cet organe fonctionne alors en mode automatique. Il en résulte une baisse de la pression dans le conduit d'insufflation 5, cette pression devenant inférieure à la pression de consigne qui peut être par exemple de 50 Pa sur le réseau d'insufflation.

Le ventilateur d'insufflation 12 accélère alors pour compenser cette chute de pression jusqu'à l'obtention de la pression de consigne. Le débit d'insufflation est donc augmenté. Le ventilateur d'insufflation 12 devient le ventilateur dit « maître » et donne par l'intermédiaire du boîtier de commande 20 une information de débit au ventilateur d'extraction 13 qui devient le ventilateur dit « esclave ».

On rappelle que cette information est obtenue à partir de la vitesse de rotation du ventilateur ou d'un paramètre électrique du ventilateur, tel que l'intensité électrique, et/ou en fonction de la pression du réseau correspondant.

Le ventilateur d'extraction 13, esclave, augmente ainsi son débit pour s'adapter au débit du ventilateur d'insufflation 12, maître. La pression dans le réseau d'extraction 8 devient alors supérieure à la pression de consigne.

Le boîtier de commande 20 pilote ensuite l'organe de modification de la section de passage de l'air 19, présent dans le réseau d'extraction 8 et fonctionnant en mode pilotable, afin d'augmenter la section de passage de l'air et ramener la pression du réseau d'extraction 8 à la pression de consigne.

La figure 2 représente une variante de réalisation de l'invention. Sur cette figure, les éléments présentant la même fonction que précédemment ont été numérotés par les mêmes références.

Cette installation diffère de celle décrite précédemment en ce que l'organe de modification de la section de passage équipant le réseau d'extraction 8 fonctionne en mode automatique et est donc référencé 18, et en ce que l'organe de modification de la section de passage équipant le réseau d'insufflation 5 fonctionne en mode pilotable et est donc référencé 19.

Dans cette forme de réalisation de l'invention, un besoin de ventilation dans une pièce technique 3, 4 est détecté, par exemple en raison d'une augmentation de l'hygrométrie liée à la production ponctuelle de vapeur d'eau en cuisine.

Après ouverture de l'organe automatique 18, la dépression dans le réseau d'extraction 8 baisse. Le ventilateur d'extraction 13 augmente sa vitesse de rotation de façon à maintenir une pression constante, et augmente ainsi le débit d'extraction. Il fournit alors, de la même manière que précédemment et par l'intermédiaire du boîtier de commande 20, une consigne au ventilateur d'insufflation 12 concernant le débit à atteindre. Le ventilateur d'insufflation 12 accélère à son tour pour atteindre la valeur de débit donnée par le ventilateur d'extraction 13. Une augmentation de la pression dans le réseau d'insufflation 5 est détectée et l'organe de modification de la section de passage 19 équipant ce réseau 5 est piloté en conséquence de façon à ramener la pression dans ce réseau 5 à la pression de référence.

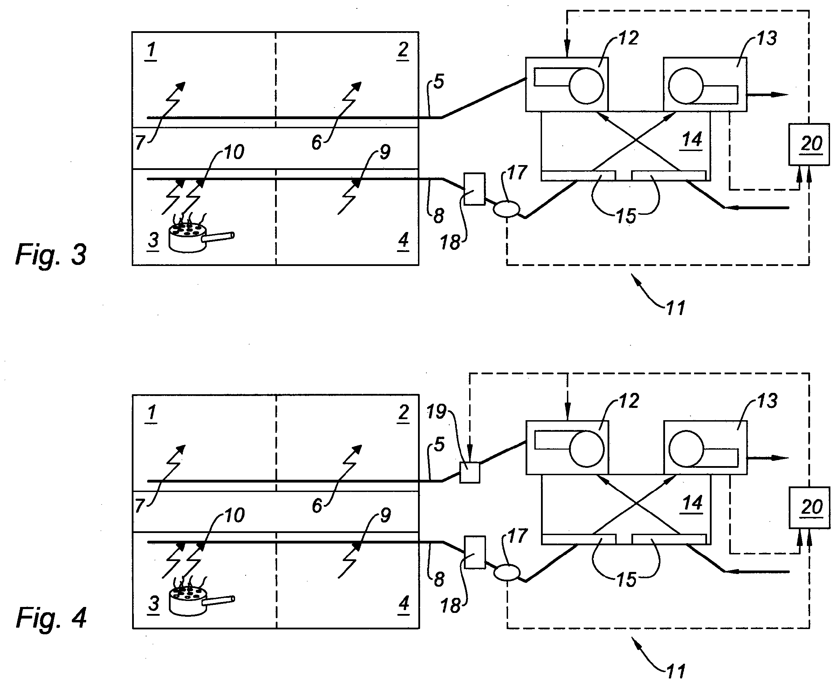

La figure 3 représente une autre variante de réalisation de l'invention, ne comportant que des moyens de mesure de la pression 17 et un organe automatique 18 de modification de la section de passage de l'air sur le réseau équipé du ventilateur maître (ici le réseau d'extraction 8). Ainsi, cette variante ne présente aucun organe de ce type ni aucun moyen de mesure sur le réseau équipé du ventilateur esclave (ici le réseau d'insufflation 5).

Le fonctionnement de cette variante de réalisation est le suivant.

Un besoin de ventilation dans une pièce technique 3, 4 est détecté, par exemple en raison d'une augmentation d'hygrométrie liée à la production ponctuelle de vapeur d'eau en cuisine.

Après ouverture de l'organe automatique de modification de la section de passage 18, la dépression dans le réseau d'extraction 8 baisse. Le ventilateur d'extraction 13 augmente sa vitesse de rotation de façon à maintenir une pression constante. Il fournit alors, de la même manière que précédemment et par l'intermédiaire du boîtier de commande 20, une consigne au ventilateur d'insufflation 12 concernant le débit à atteindre. Le ventilateur d'insufflation 12 accélère à son tour pour atteindre la valeur de débit donnée par le ventilateur d'extraction 13. L'installation est ainsi à nouveau équilibrée en débit, bien qu'une légère surpression apparaisse dans le réseau d'insufflation 5, sauf si celui-ci est largement dimensionné.

La figure 4 représente une autre variante de réalisation de l'invention, similaire à la figure 3, dans laquelle le réseau d'insufflation 5 est en outre équipé d'un organe pilotable 19 de modification de la section de passage de l'air, similaire à ceux équipant les installations des figures 1 et 2.

Le fonctionnement de cette variante de réalisation est le suivant.

Après ouverture de l'organe automatique 18 de modification de la section de passage, la dépression dans le réseau d'extraction 8 baisse. Le ventilateur d'extraction 13 augmente sa vitesse de rotation de façon à maintenir une pression constante. Il fournit alors, de la même manière que précédemment et par l'intermédiaire du boîtier de commande 20, une consigne au ventilateur d'insufflation 12 concernant le débit à atteindre. Le ventilateur d'insufflation 12 accélère à son tour pour atteindre la valeur de débit donnée par le ventilateur d'extraction 13. Le boîtier 20 pilote ensuite la position dudit organe pilotable 19 dans une position prédéterminée, afin de diminuer la pression dans le réseau d'insufflation 5. Le pilotage de l'organe 19 est ainsi réalisé sans information directe concernant la pression dans le réseau d'insufflation 5 mais permet de mieux se rapprocher de la pression de référence si les pertes de charge du réseau sont significatives.

Bien entendu, les formes de réalisation des figures 3 et 4 peuvent être transposées au cas où le ventilateur d'insufflation est le ventilateur maître, par exemple dans le cas où la présence de personnes est détectée dans une pièce de séjour.

En outre, dans les formes de réalisation décrites ci-dessous, l'installation vise à ramener le débit du ventilateur esclave sur le débit du ventilateur maître. Selon une autre possibilité de l'invention, le débit du ventilateur esclave est ramené à une valeur, dépendante du débit du ventilateur maître, mais inférieure ou supérieure à ce débit.

Comme il va de soi, l'invention ne se limite pas aux seules formes de réalisation de cette installation, décrites ci-dessus à titre d'exemples, mais elle embrasse au contraire toutes les variantes, dans les limites des revendications.

## Revendications

1. Installation de ventilation mécanique contrôlée à double flux d'un bâtiment, comprenant :
- un réseau d'insufflation d'air (5), permettant d'amener de l'air frais dans au moins une pièce dite de séjour (1, 2) ;
- un réseau d'extraction d'air (8), permettant d'extraire de l'air vicié hors d'au moins une pièce dite technique (3, 4) ;
- le réseau d'insufflation d'air (5) et le réseau d'extraction d'air (8) étant équipés respectivement d'un ventilateur d'insufflation d'air (12) et d'un ventilateur d'extraction d'air (13), pourvus chacun de moyens permettant d'ajuster respectivement le débit d'insufflation d'air et le débit d'extraction d'air fournis par les ventilateurs (12, 13) ;
- des moyens de détermination du débit dans le réseau d'extraction d'air (8) ;
- au moins l'un des réseaux d'extraction ou d'insufflation d'air (8, 5) étant équipé d'un organe de modification de la section de passage de l'air (18), réagissant de façon automatique, c'est-à-dire sans commande extérieure, à des paramètres extérieurs tels que l'hygrométrie ou le taux d'occupation d'une pièce, cette installation comportant en outre :
- des moyens de mesure de la pression (16, 17) dans le réseau (5, 8) équipé de l'organe de modification de la section de passage de l'air (18);
**caractérisée en ce qu'**elle comprend en outre :
- des moyens de détermination du débit dans le réseau d'insufflation d'air (5);
- des moyens de commande (20) conçus pour :
a) après variation de la section de passage de l'air dans le réseau équipé de l'organe correspondant (18) et
b) en fonction de la pression mesurée dans ledit réseau, piloter le ventilateur (12, 13) de ce réseau, dit ventilateur maître, pour modifier le débit dans ce réseau, et
c) ramener la pression de ce réseau à une pression de référence,
d) après détermination des débits d'air dans le réseau d'insufflation (5) et dans le réseau d'extraction (8),
e) piloter le ventilateur (13, 12) de l'autre réseau, dit ventilateur esclave, afin de d'asservir le débit fourni par le ventilateur esclave en fonction du débit fourni par le ventilateur maître.

2. Installation selon la revendication 1, **caractérisée en ce que** le réseau (5, 8) équipé du ventilateur esclave (12, 13) comporte au moins un organe de modification de la section de passage de l'air (19), équipé de moyens de pilotage dudit organe en fonction d'une commande extérieure, les moyens de commande (20) étant conçus pour, après modification de débit fourni par le ventilateur esclave, (12, 13) piloter la position dudit organe (19) dans une position prédéterminée.

3. Installation selon la revendication 1, **caractérisée en ce que** le réseau (5, 8) équipé du ventilateur esclave (12, 13) comporte des moyens de mesure de la pression (16, 17) ainsi qu'un organe de modification de la section de passage de l'air (19), équipé de moyens de pilotage dudit organe en fonction d'une commande extérieure, les moyens de commande (20) étant conçus pour, après modification de débit fourni par le ventilateur esclave (12, 13) et en fonction de la pression mesurée dans ledit réseau (5, 8), piloter la section de passage de l'air afin de ramener la pression dans ledit réseau à une pression de référence.

4. Installation selon l'une des revendications 1 à 3, **caractérisée en ce que** le débit dans le réseau d'insufflation (5), respectivement dans le réseau d'extraction (8), est déterminé en fonction de la vitesse de rotation ou d'un paramètre électrique, tel que l'intensité électrique, du ventilateur d'insufflation (12), respectivement du ventilateur d'extraction (13), et/ou en fonction de la pression dans le réseau correspondant (5, 8).

5. Installation selon la revendication 3, **caractérisée en ce que** les moyens de commande (20) sont conçus pour, après mesure des débits des deux ventilateurs (12, 13), comparer les deux débits puis ajuster le débit du ventilateur fonctionnant avec le débit le plus faible, sur le débit du ventilateur fonctionnant avec le débit le plus élevé, le ventilateur présentant le débit le plus élevé formant alors le ventilateur maître, et le ventilateur présentant le débit le plus faible formant alors le ventilateur esclave.

6. Installation selon l'une des revendications 1 à 5, **caractérisée en ce que** au moins l'un des organes (18, 19) permettant de modifier la section de passage d'air comporte un système de compensation en pression augmentant leur section d'ouverture lorsque la pression dépasse une valeur prédéterminée.

7. Installation selon l'une des revendications 1 à 6, **caractérisée en ce que** les moyens de commande (20) sont conçus pour asservir le débit du ventilateur esclave au débit du ventilateur maître avec une valeur du débit du ventilateur esclave comprise entre 75 et 100% du débit du ventilateur maître, en fonction de la perméabilité à l'air de l'enveloppe du bâtiment et de la dépression résultante admise entre l'intérieur et l'extérieur du bâtiment.

8. Installation selon l'une des revendications 1 à 7, **caractérisée en ce que** l'organe (18) de modification de la section de passage de l'air équipant le réseau comprenant le ventilateur maître et/ou l'organe (19) de modification de la section de passage de l'air équipant le réseau comprenant le ventilateur esclave est une bouche à section variable.

9. Procédé de régulation d'une installation de ventilation selon l'une des revendications 1 à 8 comportant les étapes suivantes :
- en conséquence à une variation d'un paramètre extérieur, tel qu'hygrométrie ou taux d'occupation d'une pièce, modification automatique de la section de passage de l'air par un organe (18) situé dans l'un des réseaux (5,8), d'insufflation ou d'extraction,
- mesure de la pression d'air dans ce réseau et fourniture de l'information de pression aux moyens de commande(20),
- pilotage par les moyens de commande(20) du ventilateur (12,13) associé à ce réseau pour modifier le débit et ramener la pression d'air dans ce réseau à une pression de référence,
- mesure des débits d'air dans les deux réseaux (5,8) et fourniture de l'information aux moyens de commande(20), qui pilotent le ventilateur de l'autre réseau (13,12)pour asservir le débit fourni par ce ventilateur au débit fourni par le ventilateur du premier réseau, afin de maintenir un équilibre des débits d'air insufflé et extrait.

## Patentansprüche

1. Anlage zur kontrollierten mechanischen Lüftung mit doppeltem Luftstrom für ein Gebäude, Folgendes umfassend:
- ein Lufteinblasnetz (5), das die Zuführung der Frischluft in zumindest einen, Wohnraum (1, 2) genannten, Raum ermöglicht;
- ein Abluftnetz (8), das die Abführung der schlechten Luft aus zumindest einem, Technikraum (3, 4) genannten, Raum ermöglicht;
- wobei das Lufteinblasnetz (5) und das Abluftnetz (8) jeweils mit einem Lufteinblaslüfter (12) und einem Abluftlüfter (13) ausgestattet sind, die jeweils mit Mitteln versehen sind, die es ermöglichen, jeweils den Lufteinblasdurchsatz und den Abluftdurchsatz, die von den Lüftern (12, 13) bereitgestellt werden, anzupassen;
- Mittel zum Bestimmen des Durchsatzes im Abluftnetz (8);
- wobei zumindest eines der Abluft- oder der Lufteinblasnetze (8, 5) mit einem Organ zum Ändern des Durchlassquerschnitts für die Luft (18) ausgestattet ist, das automatisch, das heißt ohne Steuerung von außen, auf äußere Parameter, wie die Luftfeuchtigkeit oder die Anwesenheitsquote in einem Raum, reagiert, wobei diese Anlage darüber hinaus Folgendes umfasst:
- Mittel zum Messen des Drucks (16, 17) im Netz (5, 8), das mit dem Organ zum Ändern des Durchlassquerschnitts für die Luft (18) ausgestattet ist;
**dadurch gekennzeichnet, dass** sie darüber hinaus Folgendes umfasst:
- Mittel zum Bestimmen des Durchsatzes im Lufteinblasnetz (5);
- Steuerungsmittel (20), die gestaltet sind, um:
a) nach der Veränderung des Durchlassquerschnitts für die Luft im Netz, das mit dem entsprechenden Organ (18) ausgestattet ist, und
b) in Abhängigkeit vom gemessenen Druck im besagten Netz den Lüfter (12, 13) dieses Netzes, der Master-Lüfter genannt wird, zu steuern, um den Durchsatz in diesem Netz zu verändern, und
c) den Druck in diesem Netz auf einen Referenzdruck zurückzubringen,
d) nach dem Bestimmen der Luftdurchsätze im Einblasnetz (5) und im Abluftnetz (8),
e) den Lüfter (12, 13) des anderen Netzes, der Slave-Lüfter genannt wird, zu steuern, um den vom Slave-Lüfter bereitgestellten Durchsatz je nach Durchsatz, der vom Master-Lüfter bereitgestellt wird, zu regeln.

2. Anlage nach Anspruch 1, **dadurch gekennzeichnet, dass** das Netz (5, 8), das mit dem Slave-Lüfter (12, 13) ausgestattet ist, zumindest ein Organ zum Ändern des Durchlassquerschnitts für die Luft (19) umfasst, das mit Mitteln zum Steuern des besagten Organs in Abhängigkeit von einem Befehl von außen ausgestattet ist, wobei die Steuerungsmittel (20) gestaltet sind, um nach der Durchsatzveränderung, die durch den Slave-Lüfter (12, 13) bereitgestellt wird, die Position des besagten Organs (19) in eine vorbestimmte Position zu steuern.

3. Anlage nach Anspruch 1, **dadurch gekennzeichnet, dass** das Netz (5, 8), das mit dem Slave-Lüfter (12, 13) ausgestattet ist, Mittel zum Messen des Drucks (16, 17), sowie ein Organ zum Ändern des Durchlassquerschnitts für die Luft (19) umfasst, das mit Mitteln zum Steuern des besagten Organs in Abhängigkeit von einem Befehl von außen ausgestattet ist, wobei die Steuerungsmittel (20) gestaltet sind, um nach der Durchsatzveränderung, die durch den Slave-Lüfter (12, 13) bereitgestellt wird, und in Abhängigkeit vom gemessenen Druck im besagten Netz (5, 8) den Durchlassquerschnitt für die Luft zu steuern, um den Druck im besagten Netz auf einen Referenzdruck zurückzubringen.

4. Anlage nach einem der Ansprüche 1 bis 3, **dadurch gekennzeichnet, dass** der Durchsatz im Einblasnetz (5), beziehungsweise im Abluftnetz (8) in Abhängigkeit von der Rotationsgeschwindigkeit oder eines elektrischen Parameters, wie der Stromstärke, des Einblaslüfters (12) beziehungsweise des Abluftlüfters (13), und/ oder in Abhängigkeit vom Druck im entsprechenden Netz (5, 8) bestimmt wird.

5. Anlage nach Anspruch 3, **dadurch gekennzeichnet, dass** die Steuerungsmittel (20) gestaltet sind, um nach der Messung der Durchsätze der beiden Lüfter (12, 13) die beiden Durchsätze zu vergleichen, und danach den Durchsatz des Lüfters, der mit dem geringeren Durchsatz arbeitet, dem Durchsatz des Lüfters anzupassen, der mit dem höheren Durchsatz arbeitet, der somit den Master-Lüfter bildet, und der Lüfter, der den geringeren Durchsatz aufweist, somit den Slave-Lüfter bildet.

6. Anlage nach einem der Ansprüche 1 bis 5, **dadurch gekennzeichnet, dass** zumindest das eine der Organe (18, 19), welches es ermöglicht, den Durchlassquerschnitt für die Luft zu ändern, ein System zur Druckkompensierung umfasst, welches deren Öffnungsquerschnitt erhöht, wenn der Druck einen vorbestimmten Wert übersteigt.

7. Anlage nach einem der Ansprüche 1 bis 6, **dadurch gekennzeichnet, dass** die Steuerungsmittel (20) gestaltet sind, um den Durchsatz des Slave-Lüfters dem Durchsatz des Master-Lüfters zu unterwerfen, mit einem Wert für den Durchsatz des Slave-Lüfters zwischen 75 und 100% des Durchsatzes des Master-Lüfters, in Abhängigkeit von der Luftdurchlässigkeit der Gebäudehülle und des daraus entstehenden zulässigen Unterdrucks zwischen dem Inneren und dem Äußeren des Gebäudes.

8. Anlage nach einem der Ansprüche 1 bis 7, **dadurch gekennzeichnet, dass** das Organ (18) zur Änderung des Durchlassquerschnitts für die Luft, welches das Netz ausstattet, das den Master-Lüfter umfasst, und/ oder das Organ (19) zur Änderung des Durchlassquerschnitts für die Luft, welches das Netz ausstattet, das den Slave-Lüfter umfasst, eine Abluftöffnung mit variablem Querschnitt ist.

9. Verfahren zum Regeln einer Lüftungsanlage nach einem der Ansprüche 1 bis 8, die folgenden Schritte umfassend:
- infolge einer Veränderung eines äußeren Parameters, wie der Luftfeuchtigkeit oder der Anwesenheitsquote in einem Raum, die automatische Änderung des Durchlassquerschnitts für die Luft durch ein Organ (18), das sich in einem der Netze (5, 8) zum Einblasen und für die Abluft, befindet,
- Messung des Luftdrucks in diesem Netz und Bereitstellen der Druckinformation für die Steuerungsmittel (20),
- Steuerung durch die Steuerungsmittel (20) des Lüfters (12, 13), der diesem Netz zugeordnet ist, um den Durchsatz zu ändern, und den Luftdruck in diesem Netz auf einen Referenzdruck zurückzubringen,
- Messung der Luftdurchsätze in den beiden Netzen (5, 8) und Bereitstellen der Information für die Steuerungsmittel (20), die den Lüfter des anderen Netzes (13, 12) steuern, um den Durchsatz, der durch diesen Lüfter bereitgestellt wird, dem Durchsatz zu unterwerfen, der vom Lüfter des ersten Netzes bereitgestellt wird, um ein Gleichgewicht der Durchsätze der eingeblasenen Luft und der Abluft aufrechtzuerhalten.

## Claims

1. A bypass controlled mechanical ventilation installation of a building, comprising:
- an air blowing network (5), allowing supplying fresh air to at least one room called reception room (1, 2);
- an air extraction network (8), allowing extracting foul air from at least one room called technical room (3, 4);
- the air blowing network (5) and the air extraction network (8) being equipped respectively with an air blowing fan (12) and an air extraction fan (13), each provided with means allowing adjusting respectively the air blowing flow rate and the air extraction flow rate supplied by the fans (12,13);
- means for determining the flow rate in the air extraction network (8);
- at least one of the air extraction or blowing networks (8, 5) being equipped with a modification member of the air passage section (18), automatically reacting, that is to say without external control, to external parameters such as the hygrometry or the occupancy rate of a room, this installation further including:
- means (16, 17) for measuring the pressure in the network (5, 8) equipped with the modification member of the air passage section (18);
**characterized in that** it further comprises:
- means for determining the flow rate in the air blowing network (5);
- control means (20) designed for:
a) after variation of the air passage section in the network equipped with the corresponding member (18) and
b) depending on the pressure measured in said network, controlling the fan (12, 13) of this network, called master fan, in order to modify the flow rate in this network, and
c) returning the pressure of this network to a reference pressure,
d) after determination of the air flow rates in the blowing network (5) and in the extraction network (8),
e) controlling the fan (13, 12) of the other network, called the slave fan, in order to servo-control the flow rate supplied by the slave fan depending on the flow rate supplied by the master fan.

2. The installation according to claim 1, **characterized in that** the network (5, 8) equipped with the slave fan (12, 13) includes at least one modification member of the air passage section (19), equipped with means for controlling said member depending on an external control, the control means (20) being designed for, after modification of the flow rate supplied by the slave fan (12, 13) controlling the position of said member (19) in a predetermined position.

3. The installation according to claim 1, **characterized in that** the network (5, 8) equipped with the slave fan (12, 13) includes means (16, 17) for measuring the pressure as well as a modification member of the air passage section (19), equipped with means for controlling said member depending on an external control, the control means (20) being designed for, after modification of the flow rate supplied by the slave fan (12, 13) and depending on the pressure measured in said network (5, 8), controlling the air passage section in order to return the pressure in said network to a reference pressure.

4. The installation according to any of claims 1 to 3, **characterized in that** the flow rate in the blowing network (5), respectively in the extraction network (8), is determined depending on the speed of rotation or an electric parameter, such as the electric current, of the blowing fan (12), respectively of the extraction fan (13), and/or depending on the pressure in the corresponding network (5, 8).

5. The installation according to claim 3, **characterized in that** the control means (20) are designed for, after measuring the flow rates of the two fans (12, 13), comparing the two flow rates and then adjusting the flow rate of the fan operating with the lowest flow rate, on the flow rate of the fan operating with the highest flow rate, the fan having the highest flow rate therefore forming the master fan, and the fan having the lowest flow rate therefore forming the slave fan.

6. The installation according to any of claims 1 to 5, **characterized in that** at least one of the members (18, 19) allowing modifying the air passage section includes a pressure compensation system increasing the opening section thereof when the pressure exceeds a predetermined value.

7. The installation according to any of claims 1 to 6, **characterized in that** the control means (20) are designed for servo-controlling the flow rate of the slave fan by the flow rate of the master fan with a value of the flow rate of the slave fan comprised between 75 and 100% of the flow rate of the master fan, depending on the air permeability of the envelope of the building and of the resulting depression admitted between the inside and the outside of the building.

8. The installation according to any of claims 1 to 7, **characterized in that** the modification member (18) of the air passage section equipping the network comprising the master fan and/or the modification member (19) of the air passage section equipping the network comprising the slave fan is a mouth with variable section.

9. A method for regulating a ventilation installation according to any of claims 1 to 8, including the following steps:
- consequently to a variation of an external parameter, such as hygrometry or occupancy rate of a room, automatically modifying the air passage section by a member (18) located in one of the blowing or extraction networks ( 5.8),
- measuring the air pressure in this network and supplying the pressure information to the control means (20),
- controlling by the control means (20) of the fan (12, 13) associated with this network in order to modify the flow rate and to return the air pressure in this network to a reference pressure,
- measuring air flow rates in the two networks (5, 8) and supplying the information to the control means (20) which control the fan of the other network (13, 12) in order to control the flow rate supplied by this fan to the flow rate supplied by the fan of the first network, in order to maintain a balance of the blown and extracted air flow rates.
